# EUROPEAN PATENT APPLICATION

(11) **EP 4 621 869 A1**
(43) Date of publication of application: **24.09.2025**
(21) Application number: 23926874.1
(22) Date of filing: 03.04.2023
(51) Int. Cl.: H01M 4/134

(54) **NEGATIVE ELECTRODE SHEET, SECONDARY BATTERY, AND ELECTRIC DEVICE**

(30) Priority: 13.03.2023 CN 202310235493
(71) Applicant: Contemporary Amperex Technology (Hong Kong) Limited, Hong Kong (HK)
(72) Inventor: WU, Kai, Ningde, Fujian 352100 (CN); YAN, Qingwei, Ningde, Fujian 352100 (CN); WANG, Jiazheng, Ningde, Fujian 352100 (CN); LIU, Liangbin, Ningde, Fujian 352100 (CN); LV, Zijian, Ningde, Fujian 352100 (CN); DONG, Xiaobin, Ningde, Fujian 352100 (CN)
(74) Representative: Ziebig Hengelhaupt Intellectual Property Attorneys Patentanwaltskanzlei PartGmbB
(86) International application number: PCT/CN2023/086026
(87) International publication number: WO 2024/187522

(57) **Abstract**

This application provides a negative electrode plate, a secondary battery, and a power consuming apparatus, and belongs to the field of battery technologies. In this application, a negative electrode active substance layer includes a first part and a second part in a thickness direction, and the first part is a part close to a negative electrode current collector. During charging of a battery, a lithiation state at the second part is higher, and a lithiation state at the first part is lower. When a mass percentage of a silicon-based material in the first part in the first part is greater than a mass percentage of a silicon-based material in the second part in the second part, expansion of the silicon-based material in the negative electrode active substance layer can be alleviated. That C₁<C₂ is set, and most of lithium of a positive electrode is intercalated into the second part to carry most of a capacity. Therefore, normal charging and discharging of the battery can be met without full intercalation for the silicon-based material in the first part, and the silicon-based material in the first part does not need to operate at full load, so that overall expansion of the negative electrode plate is greatly reduced, thereby improving first efficiency, cycle performance, and storage performance of the battery.

## Description

### CROSS-REFERENCE TO RELATED APPLICATIONS

This application claims priority to Chinese Patent Application No. 202310235493.6, entitled "NEGATIVE ELECTRODE PLATE, SECONDARY BATTERY, AND POWER CONSUMING APPARATUS" and filed on March 13, 2023, which is incorporated herein by reference in its entirety.

### BACKGROUND

Silicon-based materials are currently a type of negative electrode materials with a high gram capacity, but cycle performance and storage performance of the silicon-based materials are not ideal. A main reason for this problem is that a new solid electrolyte interface (SEI) continuously generated based on expansion and pulverization of silicon particles in a silicon-based negative electrode consumes active lithium of a positive electrode.

### SUMMARY

In view of the foregoing problem, this application provides a negative electrode plate, a secondary battery, and a power consuming apparatus, which can improve first efficiency, cycle performance, and storage performance of a battery of a silicon system.

According to a first aspect, this application provides a negative electrode plate, where the negative electrode plate includes a negative electrode current collector and a negative electrode active substance layer, the negative electrode active substance layer includes a first part and a second part in a thickness direction, the first part is a part close to the negative electrode current collector, a mass percentage of a silicon-based material in the first part is greater than a mass percentage of a silicon-based material in the second part, a capacity per unit area of the first part is C₁, a capacity per unit area of the second part is C₂, and C₁<C₂.

In the technical solution of embodiments of this application, the negative electrode active substance layer in the embodiments of this application includes the first part and the second part in the thickness direction, and the first part is the part close to the negative electrode current collector. During charging and discharging, lithium is preferentially intercalated into the second part. To be specific, during charging of a battery, a lithiation state at the second part is higher, a lithiation state at the first part is lower, and an improvement of electrochemical performance of the battery in the second part is greater than an improvement of the electrochemical performance of the battery in the first part. When the mass percentage of the silicon-based material in the first part in the first part is greater than the mass percentage of the silicon-based material in the second part in the second part, expansion of the silicon-based material in the negative electrode active substance layer can be alleviated. In addition, that C₁<C₂ is set, most of lithium of a positive electrode is intercalated into the second part to carry most of a capacity, and a capacity carried by the first part is much less than a capacity carried by the second part. Therefore, normal charging and discharging of the battery can be met without full intercalation for the silicon-based material in the first part, performance of the battery tends to the second part, and the silicon-based material in the first part also does not need to operate at full load, so that overall expansion of the negative electrode plate is greatly reduced, thereby improving first efficiency, cycle performance, and storage performance of the battery.

In some embodiments, 0.11C₂≤C₁≤0.25C₂. When 0.11C₂≤C₁≤0.25C₂, the first efficiency, the cycle performance, and the storage performance of the battery are further improved while energy density of the battery is taken into account.

In some embodiments, the first part is a first negative electrode active layer formed on a surface of the negative electrode current collector, the second part is a second negative electrode active layer formed on a surface of the first negative electrode active layer, and a difference between a mass percentage of the silicon-based material in the first negative electrode active layer in the first negative electrode active layer and a mass percentage of a silicon-based material in the second negative electrode active layer in the second negative electrode active layer ranges from 20% to 80%. The negative electrode active substance layer has a layered structure of the first negative electrode active layer and the second negative electrode active layer, and when the difference between the mass percentage of the silicon-based material in the first negative electrode active layer in the first negative electrode active layer and the mass percentage of the silicon-based material in the second negative electrode active layer in the second negative electrode active layer ranges from 20% to 80%, the mass percentage of the silicon-based material in the first part in the first part is much greater than the mass percentage of the silicon-based material in the second part in the second part, thereby further alleviating the expansion of the silicon-based material in the negative electrode active substance layer.

In some embodiments, the first part includes 30wt% to 70wt% of the silicon-based material, and the silicon-based material includes silicon oxygen and/or silicon carbon. When the first part includes 30wt% to 70wt% of the silicon-based material, overall energy density of the negative electrode plate can be improved, and on the premise of specific energy density, a thickness of the first part is reduced, a diffusion path of lithium ions is reduced, and kinetic performance is taken into account.

In some embodiments, Dv50 of the silicon-based material in the first part ranges from 1 µm to 8 µm, and Dv99≤20 µm. If a particle size of the silicon-based material is excessively large, a lithium intercalation capability for lithium ions is affected, resulting in an increase in a lithium intercalation depth, and affecting the electrochemical performance of the battery. If the particle size of the silicon-based material is excessively small, processing is difficult. In addition, the mass percentage of the silicon-based material in the first part is greater than the mass percentage of the silicon-based material in the second part. Therefore, when Dv50 of the silicon-based material in the first part ranges from 1 µm to 8 µm and Dv99≤20 µm, the electrochemical performance of the battery can be improved, and a processability can also be taken into account to reduce scratching during coating.

In some embodiments, the first part includes 10wt% to 55wt% of graphite. Graphite in the first part can provide a capacity, and when the first part includes 40wt% to 80wt% of the silicon-based material, graphite can also be used as a conductive agent, to balance conductivity of a positive electrode active material when the silicon-based material in the first part accounts in a large proportion. When the first part includes 10wt% to 55wt% of graphite, a conductive effect and the energy density of the negative electrode plate can be taken into account.

In some embodiments, Dv50 of graphite in the first part ranges from 1 µm to 8 µm, and Dv99≤30 µm. The first part has a low weight per unit area and a low thickness. Therefore, when particle sizes of graphite particles are controlled, the difficulty of coating can be reduced, strip breakage caused by scratching of a copper foil can be reduced, and electron conductance of the first part can be improved. When Dv50 of graphite in the first part ranges from 1 µm to 8 µm and Dv99≤30 µm, processing of the negative electrode plate is not affected, and the negative electrode plate can also have good conductivity.

In some embodiments, the first part includes 3wt% to 20wt% of a binder, and preferably, the binder has a glass-transition temperature less than or equal to 25°C. The binder can restrain the expansion of the silicon-based material. When the first part includes 3wt% to 20wt% of the binder, the binder can control a volume effect brought by the silicon-based material to different extents. In addition, to take into account the processability of the negative electrode plate and reduce cracking and peeling of the negative electrode plate, a process of coating negative electrode active substances is usually performed at normal temperature and pressure, and the binder with the glass-transition temperature less than or equal to 25°C can meet production requirements at normal temperature and pressure.

In some embodiments, the first part includes 0.15wt% to 1.2wt% of a carbon nanotube, and preferably, a single-arm carbon nanotube. The carbon nanotube has strong tensile strength, strong pressure resistance, and excellent conductivity performance. When the first part includes 0.15wt% to 1.2wt% of the carbon nanotube, the electron conductance of the first part can be greatly improved, and the carbon nanotube can be distributed on surfaces of particles of the silicon-based material, thereby reducing expansion of the particles of the silicon-based material. However, the carbon nanotube has poor dispersibility, and a gel phenomenon is prone to occur in a slurry. Therefore, the carbon nanotube cannot be added in large quantities, and a content of the carbon nanotube is controlled within 1.2wt%, so that the electron conductance and the processability can be taken into account and improved.

In some embodiments, an aspect ratio of the carbon nanotube is greater than or equal to 1000. When the aspect ratio of the carbon nanotube is greater than or equal to 1000, the excessively large aspect ratio of the carbon nanotube can improve the electron conductance of the first part.

In some embodiments, the first part further includes 1wt% to 5wt% of a surfactant, and preferably, sodium carboxymethyl cellulose. The first part includes the carbon nanotube, but the carbon nanotube has poor dispersibility. Therefore, when the first part further includes 1wt% to 5wt% of the surfactant, uniform dispersion of the carbon nanotube is facilitated, thereby stabilizing the processability.

In some embodiments, the first part includes 0.5wt% to 5wt% of a dotted conductive agent, and preferably, conductive carbon black. The dotted conductive agent can increase the conductivity of the first part and an electrolyte retention capability.

In some embodiments, a weight per unit area of the first part ranges from 0.3 mg/cm² to 2.3 mg/cm². When the weight per unit area of the first part ranges from 0.3 mg/cm² to 2.3 mg/cm², the kinetic performance of the battery can be taken into account and industrial production can be implemented.

In some embodiments, the second part includes a graphite material and the silicon-based material at a mass ratio of (80 to 100):(0 to 20). The improvement of the electrochemical performance of the battery in the second part is greater than the improvement of the electrochemical performance of the battery in the first part. Therefore, when the mass ratio of the graphite material to the silicon-based material in the second part is (80 to 100):(0 to 20), the electrochemical performance of the battery is better.

In some embodiments, Dv50 of the silicon-based material in the second part ranges from 1 µm to 8 µm, and Dv50 of graphite in the second part ranges from 1 µm to 20 µm. Because the second part has no technical problem in processing, a requirement for a particle size is small. The production can be met when Dv50 of the silicon-based material in the second part ranges from 1 µm to 8 µm and Dv50 of graphite in the second part ranges from 1 µm to 20 µm.

In some embodiments, a weight per unit area of the negative electrode active substance layer ranges from 5.19 mg/cm² to 14.26 mg/cm², and compaction density ranges from 1.4 g/cm³ to 1.85 g/cm³. When the weight per unit area of the negative electrode active substance layer ranges from 5.19 mg/cm² to 14.26 mg/cm² and the compaction density ranges from 1.4 g/cm³ to 1.85 g/cm³, the battery has high energy density.

In some embodiments, a thickness of the first part is h₁, a thickness of the second part is h₂, and h₂÷h₁≥2; and preferably, 45≥h₂÷h₁≥2. The thickness of the first part is controlled to be less than or equal to half of the thickness of the second part, so that deterioration of the kinetic performance can be alleviated.

In some embodiments, h₁ ranges from 1.5 µm to 15.5 µm, and h₂ ranges from 34 µm to 66 µm. When h₁ and h₂ are within the foregoing thickness ranges and that h₂÷h₁≥2 is met, the deterioration of the kinetic performance can further be alleviated.

In some embodiments, the second part includes at least two sub-parts in the thickness direction, and a mass percentage of the silicon-based material in each of the sub-parts is different. The second part may alternatively include a plurality of sub-parts, and a mass percentage of the silicon-based material in each of the sub-parts is different, to adapt to batteries of different structures and different types.

According to a second aspect, this application provides a secondary battery, where the secondary battery includes a positive electrode plate and the negative electrode plate according to the foregoing embodiments, the positive electrode plate includes a positive electrode active substance layer, and a capacity per unit area of the positive electrode active substance layer is C₃, a capacity per unit area of the negative electrode active substance layer is C₄, and 1.01C₃≤C₄≤1.2C₃.

In the technical solution of the embodiments of this application, when 1.01C₃≤C₄≤1.2C₃, security of the battery can be improved, thereby reducing lithium plating caused due to excessive lithium intercalation.

According to a third aspect, this application provides a power consuming apparatus, where power consuming apparatus includes the secondary battery according to the foregoing embodiment.

The above description only refers to an overview of the technical solution of this application. To understand the technical means of this application more clearly, it can be implemented according to the content of the description. In order to make the above-mentioned and other purposes, features and advantages of this application more apparent, the specific implementations of this application are listed below.

### BRIEF DESCRIPTION OF THE DRAWINGS

Various other advantages and benefits will become apparent to those of ordinary skill in the art upon reading the following detailed description of the preferred implementations. The accompanying drawings are only for the purpose of illustrating the preferred implementations and are not construed as limiting this application. In addition, in all the accompanying drawings, same parts are indicated by same accompanying symbols. In the accompanying drawings:
FIG. 1 is a schematic diagram of a structure of a vehicle according to some embodiments of this application;
FIG. 2 is a schematic diagram of an exploded structure of a battery according to some embodiments of this application;
FIG. 3 is a schematic diagram of an exploded structure of a battery cell according to some embodiments of this application; and
FIG. 4 is a schematic diagram of a structure of a negative electrode plate according to some embodiments of this application.

Reference numerals in the specific implementations are as follows:
1000-vehicle;
100-battery; 200-controller; 300-motor;
10-box; 11-first structure; 12-second structure;
20-battery cell; 21-end cover; 22-case; 23-electrode assembly;
400-negative electrode plate; 410-negative electrode current collector; 420-negative electrode active substance layer; 421-first part; and 422-second part.

### DETAILED DESCRIPTION

The embodiments of the technical solutions of this application will be described in detail below with reference to the accompanying drawings. The following embodiments are only used to illustrate the technical solutions of this application more explicitly, and are thus only interpreted as examples, rather than used to limit the protection scope of this application.

Unless otherwise defined, all technical and scientific terms used herein have the same meaning as commonly understood by those skilled in the technical filed to which this application belongs. The terminology used herein is for the purpose of describing particular embodiments only and is not intended to limit this application. The terms "comprising" and "having" and any variations thereof in the description and claims of this application and the above description of the accompanying drawings are intended to cover non-exclusive inclusions.

In the description according to the embodiments of this application, the technical terms "first", "second", and the like are only used to distinguish different objects, and should not be understood as indicating or implying relative importance or implying the number, specific order or primary and secondary relationship of indicated technical features. In the description according to the embodiments of this application, "a plurality of" means two or more, unless otherwise expressly and specifically defined.

Reference herein to an "embodiment" means that a specific feature, structure, or characteristic described in connection with the embodiment can be included in at least one embodiment of this application. The appearances of the phrase in various places in the specification are not necessarily all referring to the same embodiment, nor a separate or alternative embodiment that is mutually exclusive of other embodiments. It shall be explicitly and implicitly understood by those skilled in the art that the embodiments described herein may be combined with other embodiments.

In the description of this application, the term "and/or" is merely an association to describe the associated objects. It can mean that there are three kinds of relationships, such as A and/or B, which means that A exists alone, A and B exist at the same time, and B exists alone. In addition, a character "I" in this specification generally indicates an "or" relationship between contextually associated objects.

In the description of the embodiments of this application, the term "a plurality of" means two or more (including two). Similarly, "a plurality of groups" means two or more groups (including two groups), and "a plurality of pieces" means two or more pieces (including two pieces).

In the description according to the embodiments of this application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing this application and simplifying the description, rather than indicating or implying that the involved device or element should have a specific orientation or should be configured or operated in the specific orientation, therefore, they cannot be understood as limiting this application.

In the description according to the embodiments of this application, unless otherwise expressly specified and defined, the technical terms "installed", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. For those of ordinary skill in the art, the specific meanings of the above terms in this application may be interpreted according to specific situations.

Nowadays, from the perspective of development of the market situation, the power batteries are applied increasingly. The power batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of traction batteries, market demands for traction batteries are also expanding.

Silicon-based materials are currently a type of negative electrode materials with a high gram capacity, and the silicon-based materials also have advantages such as low lithium intercalation potential and wide sources. Therefore, the silicon-based materials are expected to become next-generation negative electrode materials. However, cycle performance and storage performance of the silicon-based materials are not ideal. A main reason for this problem is that a new SEI continuously generated based on expansion and pulverization of silicon particles in a silicon-based negative electrode consumes active lithium of a positive electrode.

To alleviate the problem that the new SEI continuously generated based on the expansion and pulverization of the silicon particles consumes the active lithium of the positive electrode, the applicant found through research that, during charging and discharging of a battery, in a thickness direction of a negative electrode active substance layer, lithium is preferentially intercalated into a region closer to a positive electrode active substance layer. To be specific, during the charging of the battery, in the negative electrode active substance layer, a lithiation state of a part of negative electrode active substances close to the positive electrode active substance layer is higher, a lithiation state of a part of negative electrode active substances away from the positive electrode active substance layer (close to a negative electrode current collector) is lower, and electrochemical performance of the battery tends to approach performance of a region close to the positive electrode active substance layer. In this way, when a partial region of the negative electrode active substance layer close to the positive electrode active substance layer includes more silicon-based materials, first efficiency, cycle performance, storage performance, and the like of the battery are worse.

Based on the foregoing consideration, to improve the first efficiency, the cycle performance, and the storage performance of the battery of a silicon system, a negative electrode plate is designed in the embodiments of this application. A negative electrode active substance layer includes a first part and a second part in a thickness direction, and the first part is a part close to a negative electrode current collector. During charging and discharging, lithium is preferentially intercalated into the second part. To be specific, during charging of a battery, a lithiation state at the second part is higher, a lithiation state at the first part is lower, electrochemical performance of the battery is dominated by the second part, and an improvement of the electrochemical performance of the battery in the second part is greater than an improvement of the electrochemical performance of the battery in the first part. When a mass percentage of a silicon-based material in the first part in the first part is greater than a mass percentage of a silicon-based material in the second part in the second part, expansion of the silicon-based material in the negative electrode active substance layer can be alleviated. Capacity C per unit area=active layer weight per unit area (g/cm²)*active layer gram capacity (mAh/g). In addition, that C₁<C₂ is set, most of lithium of a positive electrode is intercalated into the second part to carry most of a capacity, and a capacity carried by the first part is much less than a capacity carried by the second part. Therefore, normal charging and discharging of the battery can be met without full intercalation for the silicon-based material in the first part, performance of the battery tends to the second part, and the silicon-based material in the first part also does not need to operate at full load, so that overall expansion of the negative electrode plate is greatly reduced, thereby improving first efficiency, cycle performance, and storage performance of the battery.

The battery mentioned in the embodiments of this application is a single physical module that includes a plurality of battery cells for providing higher voltage and capacity. The battery generally includes a battery box for packaging a plurality of battery cells, and the battery box can prevent liquid or other foreign matters from affecting charging or discharging of the battery cells.

Each battery cell is a secondary battery, which may be a lithium-ion battery or a lithium-sulfur battery, but is not limited thereto. The battery cell may be cylindrical, flat, cuboid, or in other shapes. Generally, battery cells are divided into three types according to encapsulating methods: cylindrical battery cells, square battery cells and soft package battery cells.

The battery cells include electrode assemblies and electrolytes, and each electrode assembly is formed by a positive electrode plate, a negative electrode plate, and a separator. The battery cells work mainly relying on the movement of metal ions between the positive electrode plate and the negative electrode plate. The positive electrode plate includes a positive electrode current collector and a positive electrode active substance layer, the positive electrode active substance layer is coated to a surface of the positive electrode current collector, the positive electrode current collector not coated with the positive electrode active substance layer protrudes out of the positive electrode current collector already coated with the positive electrode active substance layer, and the positive electrode current collector not coated with the positive electrode active substance layer is used as a positive electrode tab. By using the lithium-ion battery as an example, a material of the positive electrode current collector may be aluminum, and a positive electrode active substance may be lithium cobalt oxide, lithium iron phosphate, ternary lithium, lithium manganese oxide, or the like. The negative electrode plate includes a negative electrode current collector and a negative electrode active substance layer, a surface of the negative electrode current collector is coated with the negative electrode active substance layer, the negative electrode current collector not coated with the negative electrode active substance layer protrudes from the negative electrode collector already coated with the negative electrode active substance layer, and the negative electrode current collector not coated with the negative electrode active substance layer is used as a negative electrode tab. A material of the negative electrode current collector may be copper. To ensure that no fusing occurs when a large current passed through, there are a plurality of positive electrode tabs and the positive electrode tabs are laminated, and there are a plurality of negative electrode tabs and the negative electrode tabs are laminated. The separator may be made of a material such as polypropylene (PP) or polyethylene (PE). In addition, the electrode assembly may be either of a winding type structure or a stacked structure, which is not defined in the embodiments of this application.

The battery cell further includes a current collecting member, where the current collecting member is configured to electrically connect the tabs to electrode terminals of the battery cell, to convey electric energy from the electrode assembly to the electrode terminals, and to the outside of the battery cell via the electrode terminals. The plurality of battery cells are electrically connected through a bus component, to implement series connection, parallel connection, or series-parallel connection of the plurality of battery cells.

The battery further includes a sampling terminal and a battery management system, where the sampling terminal is connected to the bus component and configured to collect information about the battery cell, such as a voltage or a temperature. The sampling terminal transmits the collected information about the battery cell to the battery management system. When the battery management system detects that the information about the battery cell exceeds a normal range, the battery management system limits an output power of the battery to achieve security protection.

It may be understood that the power consuming apparatuses described in the embodiments of this application using the battery cell or to which the battery is applicable may be in various forms, such as mobile phones, portable devices, notebook computers, battery cars, electric vehicles, ships, spacecrafts, electric toys, and electric tools. For example, spacecrafts include airplanes, rockets, space shuttles, and spaceships, and electric toys include fixed or mobile electric toys, such as game machines, electric vehicle toys, electric ship toys. and electric aircraft toys. The electric tools include metal cutting electric tools, grinding electric tools, assembling electric tools, and railway electric tools, such as electric drills, electric grinders, electric wrenches, electric screwdrivers, electric hammers, impact electric drills, concrete vibrators, and electric planers.

The battery cells and batteries described in the embodiments of this application are not only applicable to the above-mentioned power consuming apparatuses, but also applicable to all power consuming apparatuses using battery cells and batteries. However, for the sake of brevity, electric vehicles will be taken as an example in the following embodiments.

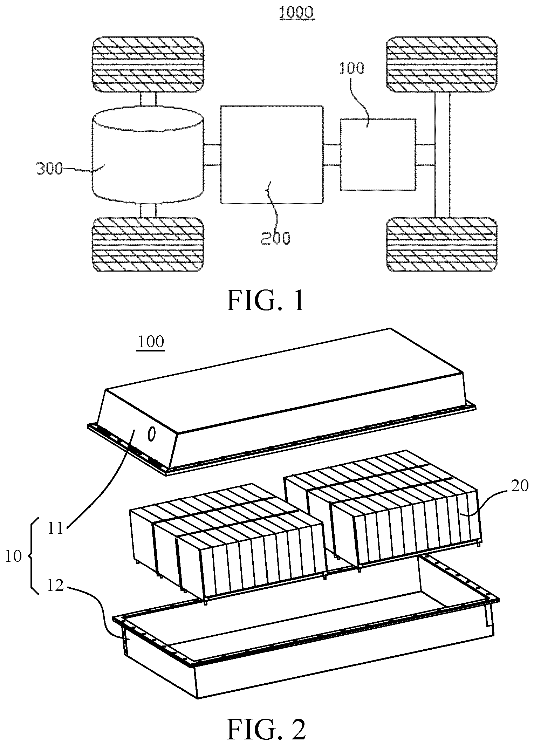

FIG. 1 is a schematic diagram of a structure of a vehicle according to some embodiments of this application. A vehicle 1000 may be a fuel powered vehicle, a gas powered vehicle, or a new energy vehicle. The new energy vehicle may be a pure electric vehicle, a hybrid electric vehicle, or an extended range vehicle, etc. The inner part of the vehicle 1000 is provided with a battery 100. The battery 100 may be arranged at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

In some embodiments of this application, the battery 100 can not only serve as a power supply for operating the vehicle 1000, but can also serve as a power supply for driving the vehicle 1000, in place of or partially in place of fuel or natural gas, to provide driving power for the vehicle 1000.

FIG. 2 is an exploded view of a battery according to some embodiments of this application. A battery 100 includes a box 10 and battery cells 20, where the battery cells 20 are accommodated in the box 10. The box 10 is configured to provide an accommodating space for the battery cells 20. The box 10 may use a variety of structures. In some embodiments, the box 10 may include a first structure 11 and a second structure 12, the first structure 11 and the second structure 12 cover each other, and the first structure 11 and the second structure 12 jointly define the accommodating space for accommodating the battery cells 20. The second structure 12 may be a hollow structure with one end being open, the first structure 11 may be a plate-like structure, and the first structure 11 covers an open side of the second structure 12, so that the first structure 11 and the second structure 12 jointly define the accommodating space. Alternatively, the first structure 11 and the second structure 12 each may be a hollow structure with one side being open, and an open side of the first structure 11 covers an open side of the second structure 12. Certainly, the box 10 formed by the first structure 11 and the second structure 12 may be in various shapes, such as a cylinder, and a cuboid.

In the battery 100, there may be a plurality of battery cells 20, and the plurality of battery cells 20 can be connected in series, parallel, or series-parallel. Series-parallel connection means that both series connection and parallel connection exist among the plurality of battery cells 20. The plurality of battery cells 20 may be directly connected in series, parallel, or series-parallel together, and then the whole formed by the plurality of battery cells 20 may be accommodated in the box 10. Certainly, the battery 100 may also be in the form of a battery module formed by the plurality of battery cells 20 that are first connected in series, parallel, or series-parallel. The plurality of battery modules are then connected in series, parallel, or series-parallel to form a whole and accommodated in the box 10. The battery 100 may also include other structures, for example, the battery 100 may also include a bus component for achieving the electrical connection between the plurality of battery cells 20.

Each battery cell 20 is a secondary battery, which may be a lithium-ion battery, a lithium-sulfur battery, a sodium-ion battery, or a magnesium-ion battery, but is not limited thereto. The battery cell 20 may be cylindrical, flat, cuboid, or in other shapes.

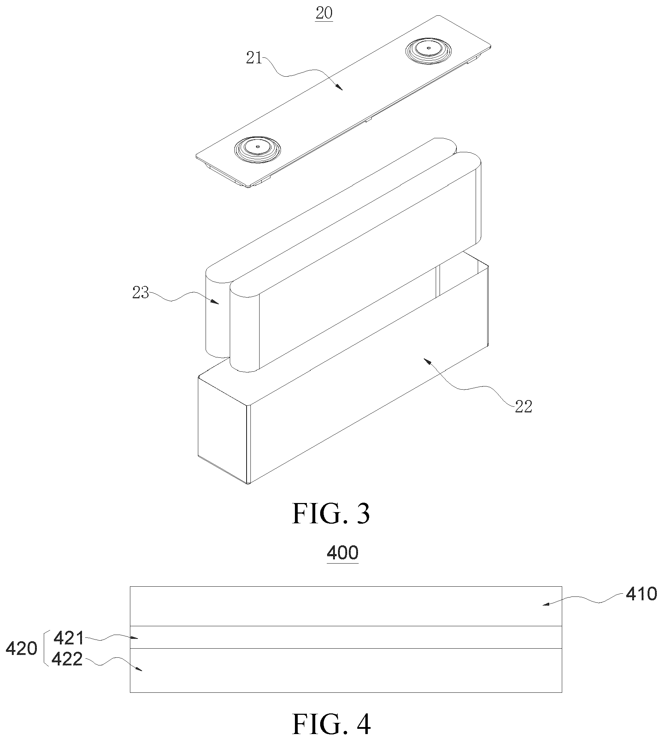

FIG. 3 is a schematic diagram of an exploded structure of a first battery cell according to some embodiments of this application. A battery cell 20 is a smallest unit forming a battery. As shown in FIG. 3, the battery cell 20 includes an end cover 21, a case 22, an electrode assembly 23, and other functional components.

The end cover 21 refers to a component that covers an opening of the case 22 to isolate an internal environment of the battery cell 20 from an external environment. A shape of the end cover 21 is not limited and may be adapted to a shape of the case 22 to fit the case 22. Optionally, the end cover 21 may be made of a material with specified hardness and strength (for example, aluminum alloy), so that the end cover 21 is less likely to deform under extrusion and collision, enabling the battery cell 20 to have a higher structural strength and enhanced safety performance. Functional components such as electrode terminals may be arranged on the end cover 21. The electrode terminals may be configured to electrically connect to the electrode assembly 23 to output or input electrical energy of the battery cell 20. In some embodiments, the end cover 21 may also be provided with a pressure relief mechanism configured to relieve internal pressure when the internal pressure or temperature in the battery cell 20 reaches a threshold. The end cover 21 may also be made of various materials, such as copper, iron, aluminum, stainless steel, aluminum alloy, and plastic, which are not particularly limited in the embodiments of this application. In some embodiments, an insulator may also be arranged on an inner side of the end cover 21. The insulator can be configured to isolate electrical connection parts in the case 22 from the end cover 21, reducing a risk of short circuit. For example, the insulator may be made of plastic or rubber.

The case 22 is an assembly configured to form an internal environment of the battery cells 20 together with the end cover 21, where the formed internal environment may be configured to accommodate the electrode assembly 23, an electrolyte, and other components. The case 22 and the end cover 21 may be separate components, an opening may be provided in the case 22, and the end cover 21 covers the opening to form the internal environment of the battery cell 20. Without limitation, the end cover 21 and the case 22 may also be integrated. Specifically, the end cover 21 and the case 22 may form a shared connection surface before other components are arranged inside the case, and then the end cover 21 covers the case 22 when inside of the case 22 needs to be enclosed. The case 22 may be of various shapes and sizes, such as a rectangular shape, a cylindrical shape, and a hexagonal prism shape. Specifically, the shape of the case 22 may be determined based on a specific shape and size of an electrode assembly 23. The case 22 may be made of various materials, such as copper, iron, aluminum, stainless steel, aluminum alloy, and plastic, which are not particularly limited in the embodiments of this application.

The electrode assembly 23 is a component in the battery cell 20 that undergoes electrochemical reactions. The case 22 may include one or more electrode assemblies 23. The electrode assembly 23 is mainly formed by winding or laminating a positive electrode plate and a negative electrode plate, and a separator is generally provided between the positive electrode plate and the negative electrode plate. Parts of the positive electrode plate and the negative electrode plate with active substances constitute a body portion of the electrode assembly, while parts of the positive electrode plate and the negative electrode plate without active substances separately constitute a tab. The positive electrode tab and the negative electrode tab may be located at one end of the body portion together or at two ends of the body portion separately. During charging and discharging of the battery, a positive electrode active substance and a negative electrode active substance react with an electrolyte, and the tabs are connected to the electrode terminals to form a current loop.

According to some embodiments of this application, FIG. 4 is a schematic diagram of a structure of a negative electrode plate according to some embodiments of this application.

This application provides a negative electrode plate 400. The negative electrode plate 400 includes a negative electrode current collector 410 and a negative electrode active substance layer 420. The negative electrode active substance layer 420 includes a first part 421 and a second part 422 in a thickness direction. The first part 421 is a part close to the negative electrode current collector 410, a mass percentage of a silicon-based material in the first part 421 is greater than a mass percentage of a silicon-based material in the second part 422, a capacity per unit area of the first part 421 is C₁, a capacity per unit area of the second part 422 is C₂, and C₁<C₂.

The first part 421 is the part of the negative electrode active substance layer 420 close to the negative electrode current collector 410.

The second part 422 is a part of the negative electrode active substance layer 420 away from the negative electrode current collector 410, and is the negative electrode active substance layer 420 except the first part 421.

In an example, the first part 421 may be a first negative electrode active layer formed on a surface of the negative electrode current collector 410, and the second part 422 may be a second negative electrode active layer formed on a surface of the first negative electrode active layer.

The mass percentage of the silicon-based material in the first part 421 is a percentage for which a mass of the silicon-based material accounts in a total mass of the first part 421.

The mass percentage of the silicon-based material in the second part 422 is a percentage for which a mass of the silicon-based material accounts in a total mass of the second part 422.

The capacity C₁ per unit area of the first part and the capacity C₂ per unit area of the second part are measured by using a testing method known in the art. In an example, C₁ and C₂ may be measured by using the following method:
S1: Clean any one surface of a double-sided negative electrode plate.
S2: Die-cut, by using a die, a single-sided negative electrode plate into a small wafer, where a radius of the small wafer is 7 mm, an area S of the small wafer is equal to 0.49π, and the area S of the small wafer is in cm².
S3: Dry the single-sided negative electrode plate with the area S, and then transfer the single-sided negative electrode plate to a glove box to prepare the single-sided negative electrode plate into a lithium half cell.
S4: Test a capacity Q₄ of the foregoing wafer by using testing equipment of Wuhan Land Electronics Co., Ltd., where the capacity Q₄ is in mAh; and determine, through calculation, that a capacity C₄ per unit area of a negative electrode active substance layer is equal to Q₄÷S, where the capacity C₄ per unit area of the negative electrode active substance layer is in mAh/cm².
S5: Peel off, by using a binder tape, a second part from the single-sided negative electrode plate processed in step S1.
S6: Test, by using the same method as steps S2, S3, and S4, a capacity Q₁ of a first part based on the negative electrode plate from which the second part is peeled off, where the capacity Q₁ is in mAh; determine, through calculation, that a capacity C₁ per unit area of the first part is equal to Q₁÷S, where the capacity C₁ per unit area of the negative electrode active substance layer is in mAh/cm²; and determine, through calculation, that a capacity C₂ per unit area of the second part is equal to C₄-C₁, where the capacity C₂ per unit area of the negative electrode active substance layer is in mAh/cm².

After the capacity C₁ per unit area of the first part and the capacity C₂ per unit area of the second part are designed, the first part and the second part with different silicon contents may be prepared by separately preparing two types of slurries, where a silicon addition amount of a first slurry is greater than a silicon addition amount of a second slurry.

The negative electrode active substance layer in the embodiments of this application includes the first part and the second part in the thickness direction, and the first part is the part close to the negative electrode current collector. During charging and discharging, lithium is preferentially intercalated into the second part. To be specific, during charging of a battery, a lithiation state at the second part is higher, a lithiation state at the first part is lower, and an improvement of electrochemical performance of the battery in the second part is greater than an improvement of the electrochemical performance of the battery in the first part. When the mass percentage of the silicon-based material in the first part in the first part is greater than the mass percentage of the silicon-based material in the second part in the second part, expansion of the silicon-based material in the negative electrode active substance layer can be alleviated. In addition, that C₁<C₂ is set, most of lithium of a positive electrode is intercalated into the second part to carry most of a capacity, and a capacity carried by the first part is much less than a capacity carried by the second part. Therefore, normal charging and discharging of the battery can be met without full intercalation for the silicon-based material in the first part, performance of the battery tends to the second part, and the silicon-based material in the first part also does not need to operate at full load, so that overall expansion of the negative electrode plate is greatly reduced, thereby improving first efficiency, cycle performance, and storage performance of the battery.

According to some embodiments of this application, optionally, 0.11C₂≤C₁≤0.25C₂.

When 0.11C₂≤C₁≤0.25C₂, the first efficiency, the cycle performance, and the storage performance of the battery are further improved while energy density of the battery is taken into account.

According to some embodiments of this application, optionally, the first part is the first negative electrode active layer formed on the surface of the negative electrode current collector, the second part is the second negative electrode active layer formed on the surface of the first negative electrode active layer, and a difference between a mass percentage of the silicon-based material in the first negative electrode active layer in the first negative electrode active layer and a mass percentage of a silicon-based material in the second negative electrode active layer in the second negative electrode active layer ranges from 20% to 80%.

In an example, the difference between the mass percentage of the silicon-based material in the first negative electrode active layer in the first negative electrode active layer and the mass percentage of the silicon-based material in the second negative electrode active layer in the second negative electrode active layer may be 25%, 30%, 35%, 40%, 45%, 50%, 55%, or 60%.

The negative electrode active substance layer has a layered structure of the first negative electrode active layer and the second negative electrode active layer, and when the difference between the mass percentage of the silicon-based material in the first negative electrode active layer in the first negative electrode active layer and the mass percentage of the silicon-based material in the second negative electrode active layer in the second negative electrode active layer ranges from 20% to 80%, the mass percentage of the silicon-based material in the first part in the first part is much greater than the mass percentage of the silicon-based material in the second part in the second part, thereby further alleviating the expansion of the silicon-based material in the negative electrode active substance layer.

Optionally, the difference between the mass percentage of the silicon-based material in the first negative electrode active layer in the first negative electrode active layer and the mass percentage of the silicon-based material in the second negative electrode active layer in the second negative electrode active layer ranges from 30% to 50%.

According to some embodiments of this application, optionally, the first part includes 30wt% to 70wt% of the silicon-based material, and the silicon-based material includes any one or more of a silicon elementary substance, silicon oxygen, and silicon carbon.

In an example, the first part may include 30wt%, 35wt%, 40wt%, 45wt%, 50wt%, 55wt%, 60wt%, 65wt%, or 70wt% of the silicon-based material.

In an example, the silicon-based material may be all silicon elementary substances, or all silicon oxygen, or all silicon carbon, or a mixture of a silicon elementary substance and silicon oxygen, or a mixture of a silicon elementary substance and silicon carbon, or a mixture of silicon oxygen and silicon carbon, or a mixture of a silicon elementary substance, silicon oxygen, and silicon carbon.

Optionally, the silicon-based material includes silicon oxygen and/or silicon carbon.

When the first part includes 30wt% to 70wt% of the silicon-based material, overall energy density of the negative electrode plate can be improved, and on the premise of specific energy density, a thickness of the first part is reduced, a diffusion path of lithium ions is reduced, and kinetic performance is taken into account.

Optionally, the first part includes 50wt% to 60wt% of the silicon-based material.

According to some embodiments of this application, optionally, Dv50 of the silicon-based material in the first part ranges from 1 µm to 8 µm, and Dv99≤20 µm.

If a particle size of the silicon-based material is excessively large, a lithium intercalation capability for lithium ions is affected, resulting in an increase in a lithium intercalation depth, and affecting the electrochemical performance of the battery. If the particle size of the silicon-based material is excessively small, processing is difficult. In addition, the mass percentage of the silicon-based material in the first part is greater than the mass percentage of the silicon-based material in the second part. Therefore, when Dv50 of the silicon-based material in the first part ranges from 1 µm to 8 µm and Dv99≤20 µm, the electrochemical performance of the battery can be improved, and a processability can also be taken into account to reduce scratching during coating.

According to some embodiments of this application, optionally, the first part includes 10wt% to 55wt% of graphite.

In an example, the first part may include 10wt%, 15wt%, 20wt%, 25wt%, 30wt%, 35wt%, 40wt%, 45wt%, 50wt%, or 55wt% of graphite.

The graphite in the first part can provide a capacity, and when the first part includes 40wt% to 80wt% of the silicon-based material, graphite can also be used as a conductive agent, to balance conductivity of a positive electrode active material when the silicon-based material in the first part accounts in a large proportion. When the first part includes 10wt% to 55wt% of graphite, a conductive effect and the energy density of the negative electrode plate can be taken into account.

According to some embodiments of this application, optionally, Dv50 of graphite in the first part ranges from 1 µm to 8 µm, and Dv99≤30 µm.

The first part has a low weight per unit area and a low thickness. Therefore, when particle sizes of graphite particles are controlled, the difficulty of coating can be reduced, strip breakage caused by scratching of a copper foil can be reduced, and electron conductance of the first part can be improved. When Dv50 of graphite in the first part ranges from 1 µm to 8 µm and Dv99≤30 µm, processing of the negative electrode plate is not affected, and the negative electrode plate can also have good conductivity.

According to some embodiments of this application, optionally, the first part includes 3wt% to 20wt% of a binder, and preferably, the binder has a glass-transition temperature less than or equal to 25°C.

In an example, the first part may include 3wt%, 5wt%, 8wt%, 10wt%, 12wt%, 15wt%, 18wt%, or 20wt% of the binder.

The binder can restrain the expansion of the silicon-based material. When the first part includes 3wt% to 20wt% of the binder, the binder can control a volume effect brought by the silicon-based material to different extents. In addition, to take into account the processability of the negative electrode plate and reduce cracking and peeling of the negative electrode plate, a process of coating negative electrode active substances is usually performed at normal temperature and pressure, and the binder with the glass-transition temperature less than or equal to 25°C can meet production requirements at normal temperature and pressure.

Optionally, the binder is styrene-butadiene rubber.

Styrene-butadiene rubber has a glass transition temperature lower than 0°C. When styrene-butadiene rubber is selected as the binder in the first part, expansion of silicon particles can be more effectively inhibited, the negative electrode plate can have better mechanical performance, and structural stability of the negative electrode plate can be ensured.

According to some embodiments of this application, optionally, the first part includes 0.15wt% to 1.2wt% of a carbon nanotube, and preferably, a single-arm carbon nanotube.

In an example, the first part may include 0.15wt%, 0.2wt%, 0.5wt%, 0.8wt%, 1wt%, or 1.2wt%.

The carbon nanotube has strong tensile strength, strong pressure resistance, and excellent conductivity performance. When the first part includes 0.15wt% to 1.2wt% of the carbon nanotube, the electron conductance of the first part can be greatly improved, and the carbon nanotube can be distributed on surfaces of particles of the silicon-based material, thereby reducing expansion of the particles of the silicon-based material. However, the carbon nanotube has poor dispersibility, and a gel phenomenon is prone to occur in a slurry. Therefore, the carbon nanotube cannot be added in large quantities, and a content of the carbon nanotube is controlled within 1.2wt%, so that the electron conductance and the processability can be taken into account and improved. The single-arm carbon nanotube belongs to a linear material.

According to some embodiments of this application, optionally, an aspect ratio of the carbon nanotube is greater than or equal to 1000.

In an example, the aspect ratio of the carbon nanotube may be 1000, 1500, 2000, 2500, 3000, 3500, 4000, 4500, 5000, 5500, 6000, 6500, 7000, 7500, 8000, 8500, 9000, 9500, or 10000.

When the aspect ratio of the carbon nanotube is greater than or equal to 1000, the excessively large aspect ratio of the carbon nanotube can improve the electron conductance of the first part.

Optionally, the aspect ratio of the carbon nanotube ranges from 1000 to 10000.

According to some embodiments of this application, optionally, the first part further includes 1wt% to 5wt% of a surfactant, and preferably, sodium carboxymethyl cellulose.

In an example, the first part may further include 1wt%, 2wt%, 3wt%, 4wt%, or 5wt% of the surfactant.

The first part includes the carbon nanotube, but the carbon nanotube has poor dispersibility. Therefore, when the first part further includes 1wt% to 5wt% of the surfactant, uniform dispersion of the carbon nanotube is facilitated, thereby stabilizing the processability.

According to some embodiments of this application, optionally, the first part includes 0.5wt% to 5wt% of a dotted conductive agent, and preferably, conductive carbon black.

In an example, the first part may further include 0.5wt%, 1wt%, 2wt%, 3wt%, 4wt%, or 5wt% of the dotted conductive agent.

The dotted conductive agent is a conductive substance with an aspect ratio greater than 1.5.

The dotted conductive agent can increase the conductivity of the first part and an electrolyte retention capability.

Optionally, the first part includes 1wt% to 2wt% of the dotted conductive agent.

Optionally, the dotted conductive agent includes any one or more of superconducting carbon, acetylene black, Ketjen black, conductive carbon black, graphene, and carbon dots.

According to some embodiments of this application, optionally, a weight per unit area of the first part ranges from 0.3 mg/cm² to 2.3 mg/cm².

In an example, the weight per unit area of the first part may be 0.3 mg/cm², 0.5 mg/cm², 0.8 mg/cm², 1 mg/cm², 1.5 mg/cm², 2 mg/cm², or 2.3 mg/cm².

When the weight per unit area of the first part ranges from 0.3 mg/cm² to 2.3 mg/cm², the kinetic performance of the battery can be taken into account and industrial production can be implemented.

According to some embodiments of this application, optionally, the second part includes a graphite material and the silicon-based material at a mass ratio of (80 to 100):(0 to 20).

The second part includes the graphite material and does not include the silicon-based material; or
the second part includes the graphite material and the silicon-based material.

In an example, the mass ratio of the graphite material to the silicon-based material in the second part may be 80:20, 85:15, 90:10, 95:5, or 100:0.

The improvement of the electrochemical performance of the battery in the second part is greater than the improvement of the electrochemical performance of the battery in the first part. Therefore, when the mass ratio of the graphite material to the silicon-based material in the second part is (80 to 100):(0 to 20), the electrochemical performance of the battery is better.

Optionally, the mass ratio of the graphite material to the silicon-based material in the second part is 100:0, in other words, the second part does not include the silicon-based material.

According to some embodiments of this application, optionally, Dv50 of the silicon-based material in the second part ranges from 1 µm to 8 µm, and Dv50 of graphite in the second part ranges from 1 µm to 20 µm.

Because the second part has no technical problem in processing, a requirement for a particle size is small. The production can be met when Dv50 of the silicon-based material in the second part ranges from 1 µm to 8 µm and Dv50 of graphite in the second part ranges from 1 µm to 20 µm.

According to some embodiments of this application, optionally, a weight per unit area of the negative electrode active substance layer ranges from 5.19 mg/cm² to 14.26 mg/cm², and compaction density ranges from 1.4 g/cm³ to 1.85 g/cm³.

In an example, the weight per unit area of the negative electrode active substance layer may be 5.19 mg/cm², 5.5 mg/cm², 6 mg/cm², 6.5 mg/cm², 7 mg/cm², 7.5 mg/cm², 8 mg/cm², 8.5 mg/cm², 9 mg/cm², 9.5 mg/cm², 10 mg/cm², 10.5 mg/cm², 11 mg/cm², 11.5 mg/cm², 12 mg/cm², 12.5 mg/cm², 13 mg/cm², 13.5 mg/cm², 14 mg/cm², or 14.26 mg/cm².

In an example, the compaction density of the negative electrode active substance layer may be 1.4 g/cm³, 1.5 g/cm³, 1.6 g/cm³, 1.7 g/cm³, 1.8 g/cm³, or 1.85 g/cm³.

When the weight per unit area of the negative electrode active substance layer ranges from 5.19 mg/cm² to 14.26 mg/cm² and the compaction density ranges from 1.4 g/cm³ to 1.85 g/cm³, the battery has high energy density.

According to some embodiments of this application, optionally, a thickness of the first part is h₁, a thickness of the second part is h₂, and h₂÷h₁≥2; and preferably, 45≥h₂÷h₁≥2.

The thickness of the first part is controlled to be less than or equal to half of the thickness of the second part, so that deterioration of the kinetic performance can be alleviated.

According to some embodiments of this application, optionally, h₁ ranges from 1.5 µm to 15.5 µm, and h₂ ranges from 34 µm to 66 µm.

In an example, h₁ may be 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, or 15.5 µm.

h₂ may be 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, 60 µm, 61 µm, 62 µm, 63 µm, 64 µm, 65 µm, or 66 µm.

When h₁ and h₂ are within the foregoing thickness ranges and that h₂÷h₁≥2 is met, the deterioration of the kinetic performance can further be alleviated.

According to some embodiments of this application, optionally, the second part includes at least two sub-parts in the thickness direction, and a mass percentage of the silicon-based material in each of the sub-parts is different.

The second part may alternatively include a plurality of sub-parts, and a mass percentage of the silicon-based material in each of the sub-parts is different, to adapt to batteries of different structures and different types.

### Example 1

This example of this application provided a secondary battery and a preparation method therefor. The preparation method included the following steps.

S1: Prepare a negative electrode plate.

### A first part was formed:

Silicon monoxide, artificial graphite, styrene-butadiene rubber, conductive carbon black (SP), a single-arm carbon nanotube, and sodium carboxymethyl cellulose were fully stirred and mixed in deionized water at a mass ratio of 50:37.2:10:1:0.3:1.5, so that a first negative electrode slurry was prepared. Then, the first negative electrode slurry was uniformly coated on a copper current collector whose thickness was 8 µm and that included a conductive carbon primer with a thickness of 2 µm, and dried to obtain a negative electrode plate semi-finished product with a weight per unit area of 0.81 mg/cm².

Dv50 of the silicon monoxide was 5 µm, Dv50 of artificial graphite was 4.7 µm, Dv99 of artificial graphite was 13 µm, and an aspect ratio of the single-arm carbon nanotube was 5000.

### A second part was formed:

Artificial graphite, styrene-butadiene rubber, sodium carboxymethyl cellulose, and conductive carbon black (Super-P, SP) were fully stirred and mixed in deionized water at a mass ratio of 96.2:1.8:1.2:0.8, so that a second negative electrode slurry was prepared. The second negative electrode slurry was coated on the foregoing first part to form the second part. After drying, cold pressing, and cutting were performed, a negative electrode plate with compaction density of 1.65 g/cm³ and a weight per unit area of 10.62 mg/cm² was obtained.

Dv50 of artificial graphite was 15.3 µm.

A silicon content of a negative electrode active substance layer of the negative electrode plate was 3.79wt%.

S2: Prepare a positive electrode plate.

Lithium nickel cobalt manganese oxide LiNi_{0.8}Co_{0.8}Mn_{0.1}O₂(NCM811), conductive carbon black (Super P), and polyvinylidene fluoride were fully stirred and mixed in an appropriate amount of N-methylpyrrolidone at a weight ratio of 97.5:1.5:1, so that a uniform positive electrode slurry was formed. The positive electrode slurry was coated on a surface of an aluminum foil of a positive electrode current collector. After drying, cold pressing, slitting, and cutting were performed, a positive electrode plate with compaction density of 3.5 g/cm³ and a weight per unit area of 18.04 mg/cm² was obtained.

S3: Select a separator.

A polyethylene film with a thickness of 12 µm was used as the separator.

S4: Prepare an electrolyte.

Ethylene carbonate, ethyl methyl carbonate, and diethyl carbonate were mixed at a volume ratio of 1:1:1, and then LiPF₆ was uniformly dissolved in the foregoing solution, so that the electrolyte was obtained. In the electrolyte, a concentration of LiPF₆ was 1 mol/L.

S5: Prepare a secondary battery.

The positive electrode plate, the separator, and the negative electrode plate were stacked sequentially, so that the separator was located between the positive electrode plate and the negative electrode plate for isolation. A lithium foil was arranged on a surface of a non-reaction region, and then wound to obtain an electrode assembly. The electrode assembly was arranged in an outer packaging case, drying was performed, and then the electrolyte was injected. After processes such as vacuum packaging, standing, formation, and shaping were performed, the secondary battery was obtained.

### Example 2

This example of this application provided a secondary battery and a preparation method therefor. In Example 2, based on Example 1, the weight per unit area of the negative electrode plate semi-finished product was changed to 0.23 mg/cm², the weight per unit area of the negative electrode plate was changed to 11.46 mg/cm², and other parts remained unchanged.

The silicon content of the negative electrode active substance layer of the negative electrode plate was 1.01wt%.

### Example 3

This example of this application provided a secondary battery and a preparation method therefor. In Example 3, based on Example 1, the weight per unit area of the negative electrode plate semi-finished product was changed to 0.48 mg/cm², the weight per unit area of the negative electrode plate was changed to 11.1 mg/cm², and other parts remained unchanged.

The silicon content of the negative electrode active substance layer of the negative electrode plate was 2.16wt%.

### Example 4

This example of this application provided a secondary battery and a preparation method therefor. In Example 4, based on Example 1, the weight per unit area of the negative electrode plate semi-finished product was changed to 0.97 mg/cm², the weight per unit area of the negative electrode plate was changed to 10.4 mg/cm², and other parts remained unchanged.

The silicon content of the negative electrode active substance layer of the negative electrode plate was 4.65wt%.

### Example 5

This example of this application provided a secondary battery and a preparation method therefor. In Example 5, based on Example 1, the weight per unit area of the negative electrode plate semi-finished product was changed to 1.38 mg/cm², the weight per unit area of the negative electrode plate was changed to 9.8 mg/cm², and other parts remained unchanged.

The silicon content of the negative electrode active substance layer of the negative electrode plate was 7.06wt%.

### Example 6

This example of this application provided a secondary battery and a preparation method therefor. In Example 6, based on Example 1, the weight per unit area of the negative electrode plate semi-finished product was changed to 2.36 mg/cm², the weight per unit area of the negative electrode plate was changed to 8.4 mg/cm², and other parts remained unchanged.

The silicon content of the negative electrode active substance layer of the negative electrode plate was 14.03wt%.

### Example 7

This example of this application provided a secondary battery and a preparation method therefor. In Example 7, based on Example 1, the ratio of silicon monoxide, artificial graphite, styrene-butadiene rubber, conductive carbon black (SP), the single-arm carbon nanotube, and sodium carboxymethyl cellulose in the first part was changed to 20:67.2:10:1:0.3:1.5, and other parts remained unchanged.

The silicon content of the negative electrode active substance layer of the negative electrode plate was 1.52wt%.

### Example 8

This example of this application provided a secondary battery and a preparation method therefor. In Example 8, based on Example 1, the ratio of silicon monoxide, artificial graphite, styrene-butadiene rubber, conductive carbon black (SP), the single-arm carbon nanotube, and sodium carboxymethyl cellulose in the first part was changed to 30:55:12.2:1:0.3:1.5, and other parts remained unchanged.

The silicon content of the negative electrode active substance layer of the negative electrode plate was 2.28wt%.

### Example 9

This example of this application provided a secondary battery and a preparation method therefor. In Example 9, based on Example 1, the ratio of silicon monoxide, artificial graphite, styrene-butadiene rubber, conductive carbon black (SP), the single-arm carbon nanotube, and sodium carboxymethyl cellulose in the first part was changed to 40:47.2:10:1:0.3:1.5, and other parts remained unchanged.

The silicon content of the negative electrode active substance layer of the negative electrode plate was 3.05wt%.

### Example 10

This example of this application provided a secondary battery and a preparation method therefor. In Example 10, based on Example 1, the ratio of silicon monoxide, artificial graphite, styrene-butadiene rubber, conductive carbon black (SP), the single-arm carbon nanotube, and sodium carboxymethyl cellulose in the first part was changed to 60:27.2:10:1:0.3:1.5, and other parts remained unchanged.

The silicon content of the negative electrode active substance layer of the negative electrode plate was 4.57wt%.

### Example 11

This example of this application provided a secondary battery and a preparation method therefor. In Example 11, based on Example 1, the ratio of silicon monoxide, artificial graphite, styrene-butadiene rubber, conductive carbon black (SP), the single-arm carbon nanotube, and sodium carboxymethyl cellulose in the first part was changed to 70:17.2:10:1:0.3:1.5, and other parts remained unchanged.

The silicon content of the negative electrode active substance layer of the negative electrode plate was 5.33wt%.

### Example 12

This example of this application provided a secondary battery and a preparation method therefor. In Example 12, based on Example 1, the ratio of silicon monoxide, artificial graphite, styrene-butadiene rubber, conductive carbon black (SP), the single-arm carbon nanotube, and sodium carboxymethyl cellulose in the first part was changed to 80:7.2:10:1:0.3:1.5, and other parts remained unchanged.

The silicon content of the negative electrode active substance layer of the negative electrode plate was 6.1wt%.

### Example 13

This example of this application provided a secondary battery and a preparation method therefor. In Example 13, based on Example 1, the ratio of silicon monoxide, artificial graphite, styrene-butadiene rubber, conductive carbon black (SP), the single-arm carbon nanotube, and sodium carboxymethyl cellulose in the first part was changed to 50:44.2:3:1:0.3:1.5, and other parts remained unchanged.

The silicon content of the negative electrode active substance layer of the negative electrode plate was 3.79wt%.

### Example 14

This example of this application provided a secondary battery and a preparation method therefor. In Example 14, based on Example 1, the ratio of silicon monoxide, artificial graphite, styrene-butadiene rubber, conductive carbon black (SP), the single-arm carbon nanotube, and sodium carboxymethyl cellulose in the first part was changed to 50:27.2:20:1:0.3:1.5, and other parts remained unchanged.

The silicon content of the negative electrode active substance layer of the negative electrode plate was 3.79wt%.

### Example 15

This example of this application provided a secondary battery and a preparation method therefor. In Example 15, based on Example 1, the ratio of silicon monoxide, artificial graphite, styrene-butadiene rubber, conductive carbon black (SP), the single-arm carbon nanotube, and sodium carboxymethyl cellulose in the first part was changed to 50:37.7:10:0.5:0.3:1.5, and other parts remained unchanged.

The silicon content of the negative electrode active substance layer of the negative electrode plate was 3.79wt%.

### Example 16

This example of this application provided a secondary battery and a preparation method therefor. In Example 16, based on Example 1, the ratio of silicon monoxide, artificial graphite, styrene-butadiene rubber, conductive carbon black (SP), the single-arm carbon nanotube, and sodium carboxymethyl cellulose in the first part was changed to 50:33.2:10:5:0.3:1.5, and other parts remained unchanged.

The silicon content of the negative electrode active substance layer of the negative electrode plate was 3.79wt%.

### Example 17

This example of this application provided a secondary battery and a preparation method therefor. In Example 17, based on Example 1, the ratio of silicon monoxide, artificial graphite, styrene-butadiene rubber, conductive carbon black (SP), the single-arm carbon nanotube, and sodium carboxymethyl cellulose in the first part was changed to 50:37.95:10:1:0.05:1, and other parts remained unchanged.

The silicon content of the negative electrode active substance layer of the negative electrode plate was 3.79wt%.

### Example 18

This example of this application provided a secondary battery and a preparation method therefor. In Example 18, based on Example 1, the ratio of silicon monoxide, artificial graphite, styrene-butadiene rubber, conductive carbon black (SP), the single-arm carbon nanotube, and sodium carboxymethyl cellulose in the first part was changed to 50:32.8:10:1:1.2:5, and other parts remained unchanged.

The silicon content of the negative electrode active substance layer of the negative electrode plate was 3.79wt%.

### Example 19

This example of this application provided a secondary battery and a preparation method therefor. In Example 19, based on Example 1, the aspect ratio of the arm carbon nanotube was changed to 1000, and other parts remained unchanged.

The silicon content of the negative electrode active substance layer of the negative electrode plate was 3.79wt%.

### Example 20

This example of this application provided a secondary battery and a preparation method therefor. In Example 20, based on Example 1, the aspect ratio of the arm carbon nanotube was changed to 10000, and other parts remained unchanged.

The silicon content of the negative electrode active substance layer of the negative electrode plate was 3.79wt%.

### Example 21

This example of this application provided a secondary battery and a preparation method therefor. In Example 21, based on Example 1, elements of the second part were changed as follows: Artificial graphite, silicon monoxide, styrene-butadiene rubber, sodium carboxymethyl cellulose, and conductive carbon black (Super-P, SP) were mixed at a ratio of 94.2:2:1.8:1.2:0.8, the weight per unit area of the negative electrode plate was 10.06 mg/cm², and other parts remained unchanged.

The silicon content of the negative electrode active substance layer of the negative electrode plate was 4.84wt%.

### Example 22

This example of this application provided a secondary battery and a preparation method therefor. In Example 22, based on Example 1, elements of the second part were changed as follows: Artificial graphite, silicon monoxide, styrene-butadiene rubber, sodium carboxymethyl cellulose, and conductive carbon black (Super-P, SP) were mixed at a ratio of 91.2:5:1.8:1.2:0.8, the weight per unit area of the negative electrode plate was 9.31 mg/cm², and other parts remained unchanged.

The silicon content of the negative electrode active substance layer of the negative electrode plate was 8.89wt%.

### Example 23

This example of this application provided a secondary battery and a preparation method therefor. In Example 23, based on Example 1, elements of the second part were changed as follows: Artificial graphite, silicon monoxide, styrene-butadiene rubber, sodium carboxymethyl cellulose, conductive carbon black (Super-P, SP), and a single-arm carbon nanotube were mixed at a mass ratio of 86.2:10:1.8:1.2:0.6:0.2, the weight per unit area of the negative electrode plate was 8.30 mg/cm², and other parts remained unchanged.

The silicon content of the negative electrode active substance layer of the negative electrode plate was 13.88wt%.

### Example 24

This example of this application provided a secondary battery and a preparation method therefor. In Example 24, based on Example 1, elements of the second part were changed as follows: Artificial graphite, silicon monoxide, styrene-butadiene rubber, sodium carboxymethyl cellulose, conductive carbon black (Super-P, SP), and a single-arm carbon nanotube were mixed at a mass ratio of 81.2:15:1.8:1.2:0.5:0.3, the weight per unit area of the negative electrode plate was 7.51 mg/cm², and other parts remained unchanged.

The silicon content of the negative electrode active substance layer of the negative electrode plate was 18.75wt%.

### Example 25

This example of this application provided a secondary battery and a preparation method therefor. In Example 25, based on Example 1, elements of the second part were changed as follows: Artificial graphite, silicon monoxide, styrene-butadiene rubber, sodium carboxymethyl cellulose, conductive carbon black (Super-P, SP), and a single-arm carbon nanotube were mixed at a ratio of 76.2:20:1.8:1.2:0.5:0.3, the weight per unit area of the negative electrode plate was 6.87 mg/cm², and other parts remained unchanged.

The silicon content of the negative electrode active substance layer of the negative electrode plate was 23.52wt%.

### Example 26

This example of this application provided a secondary battery and a preparation method therefor. In Example 26, based on Example 23, silicon monoxide in the second part was replaced with a silicon carbon material, the silicon carbon material included a structure in which a silicon elementary substance was deposited in pores in porous carbon, and other parts remained unchanged.

The silicon content of the negative electrode active substance layer of the negative electrode plate was 13.88wt%.

### Comparative example 1

This comparative example of this application provided a secondary battery and a preparation method therefor. In Comparative example 1, based on Example 1, a method for preparing a negative electrode plate was changed to the following method: Artificial graphite, silicon monoxide, styrene-butadiene rubber, sodium carboxymethyl cellulose, conductive carbon black (Super-P, SP), and a single-arm carbon nanotube were fully stirred and mixed in deionized water at a mass ratio of 93.2%:3%:1.8%:1.2%:0.7%:0.1%, so that a negative electrode slurry was prepared. The negative electrode slurry was uniformly coated on a copper current collector with a thickness of 8 µm. After drying, cold pressing, and cutting were performed, a negative electrode plate with compaction density of 1.65 g/cm³ and a weight per unit area of 10.77 mg/cm² was obtained. Others parts remained unchanged.

The silicon content of the negative electrode active substance layer of the negative electrode plate was 3wt%.

### Comparative example 2

This comparative example of this application provided a secondary battery and a preparation method therefor. In Comparative example 2, based on Example 1, a method for preparing a negative electrode plate was changed to the following method: Artificial graphite, silicon monoxide, styrene-butadiene rubber, sodium carboxymethyl cellulose, conductive carbon black (Super-P, SP), and a single-arm carbon nanotube were fully stirred and mixed in deionized water at a mass ratio of 90.2%:6%:1.8%:1.2%:0.7%:0.1%, so that a negative electrode slurry was prepared. The negative electrode slurry was uniformly coated on a copper current collector with a thickness of 8 µm. After drying, cold pressing, and cutting were performed, a negative electrode plate with compaction density of 1.65 g/cm³ and a weight per unit area of 9.93 mg/cm² was obtained. Others parts remained unchanged.

The silicon content of the negative electrode active substance layer of the negative electrode plate was 6wt%.

### Comparative example 3

This comparative example of this application provided a secondary battery and a preparation method therefor. In Comparative example 3, based on Example 1, a method for preparing a negative electrode plate was changed to the following method: Artificial graphite, silicon monoxide, styrene-butadiene rubber, sodium carboxymethyl cellulose, conductive carbon black (Super-P, SP), and a single-arm carbon nanotube were fully stirred and mixed in deionized water at a mass ratio of 83.2%:13%:1.8%:1.2%:0.5%:0.3%, so that a negative electrode slurry was prepared. The negative electrode slurry was uniformly coated on a copper current collector with a thickness of 8 µm. After drying, cold pressing, and cutting were performed, a negative electrode plate with compaction density of 1.65 g/cm³ and a weight per unit area of 8.402 mg/cm² was obtained. Others parts remained unchanged.

The silicon content of the negative electrode active substance layer of the negative electrode plate was 13wt%.

### Comparative example 4

This comparative example of this application provided a secondary battery and a preparation method therefor. In Comparative example 4, based on Example 1, a method for preparing a negative electrode plate was changed to the following method: Artificial graphite, silicon monoxide, styrene-butadiene rubber, sodium carboxymethyl cellulose, conductive carbon black (Super-P, SP), and a single-arm carbon nanotube were fully stirred and mixed in deionized water at a mass ratio of 78.2%:18%:1.8%:1.2%:0.5%:0.3%, so that a negative electrode slurry was prepared. The negative electrode slurry was uniformly coated on a copper current collector with a thickness of 8 µm. After drying, cold pressing, and cutting were performed, a negative electrode plate with compaction density of 1.65 g/cm³ and a weight per unit area of 7.566 mg/cm² was obtained. Others parts remained unchanged.

The silicon content of the negative electrode active substance layer of the negative electrode plate was 18wt%.

### Comparative example 5

This comparative example of this application provided a secondary battery and a preparation method therefor. In Comparative example 5, based on Example 1, a method for preparing a negative electrode plate was changed to the following method: Artificial graphite, silicon monoxide, styrene-butadiene rubber, sodium carboxymethyl cellulose, conductive carbon black (Super-P, SP), and a single-arm carbon nanotube were fully stirred and mixed in deionized water at a mass ratio of 73.2%:23%:1.8%:1.2%:0.5%:0.3%, so that a negative electrode slurry was prepared. The negative electrode slurry was uniformly coated on a copper current collector with a thickness of 8 µm. After drying, cold pressing, and cutting were performed, a negative electrode plate with compaction density of 1.65 g/cm³ and a weight per unit area of 6.88 mg/cm² was obtained. Others parts remained unchanged.

The silicon content of the negative electrode active substance layer of the negative electrode plate was 23wt%.

### Comparative example 6

This comparative example of this application provided a secondary battery and a preparation method therefor. In Comparative example 6, based on Comparative example 3, silicon monoxide was replaced with a silicon carbon material, the silicon carbon material included a structure in which a silicon elementary substance was deposited in pores in porous carbon, and other parts remained unchanged.

The silicon content of the negative electrode active substance layer of the negative electrode plate was 13wt%.

### Comparative example 7

This comparative example of this application provided a secondary battery and a preparation method therefor. In Comparative example 7, based on Example 1, the weight per unit area of the negative electrode plate semi-finished product was changed to 2.53 mg/cm², the weight per unit area of the negative electrode plate was changed to 8.154 mg/cm², and other parts remained unchanged.

The silicon content of the negative electrode active substance layer of the negative electrode plate was 15.49wt%.

### Comparative example 8

This comparative example of this application provided a secondary battery and a preparation method therefor. In Comparative example 8, the second part in Example 25 was designed as a first part, the first part in Example 25 was designed as a second part, and other parts remained unchanged.

The silicon content of the negative electrode active substance layer of the negative electrode plate was 23.52wt%.

For each of the secondary batteries in Examples 1 to 26 and Comparative examples 1 to 8, a mass percentage of a silicon-based material in the first part in the first part, a mass percentage of a silicon-based material in the second part in the second part, C₁, C₂, h₁, h₂, and h₂/h₁ were shown in Table 1.

**Table 1 Some parameters of the secondary batteries in Examples 1 to 26 and Comparative examples 1 to 8**

| Item | Mass percentage (wt%) of the silicon-based material in the first part in the first part | Mass percentage (wt%) of the silicon-based material in the second part in the second part | C₁ | C₂ | h₁ (µm) | h₂ (µm) | h₂/h₁ |
|---|---|---|---|---|---|---|---|
| Example 1 | 50 | 0 | 0.704 | 3.521 | 5.2 | 57.3 | 11 |
| Example 2 | 50 | 0 | 0.201 | 4.024 | 1.5 | 65.9 | 44.2 |
| Example 3 | 50 | 0 | 0.419 | 3.806 | 3.1 | 62.2 | 20 |
| Example 4 | 50 | 0 | 0.845 | 3.38 | 6.2 | 54.9 | 8.8 |
| Example 5 | 50 | 0 | 1.207 | 3.018 | 9.0 | 48.6 | 5.4 |
| Example 6 | 50 | 0 | 2.058 | 2.167 | 15.4 | 34.0 | 2.2 |
| Example 7 | 20 | 0 | 0.434 | 3.521 | 5.2 | 57.3 | 11 |
| Example 8 | 30 | 0 | 0.519 | 3.521 | 5.2 | 57.3 | 11 |
| Example 9 | 40 | 0 | 0.617 | 3.521 | 5.2 | 57.3 | 11 |
| Example 10 | 60 | 0 | 0.801 | 3.521 | 5.2 | 57.3 | 11 |
| Example 11 | 70 | 0 | 0.893 | 3.521 | 5.2 | 57.3 | 11 |
| Example 12 | 80 | 0 | 0.983 | 3.521 | 5.2 | 57.3 | 11 |
| Example 13 | 50 | 0 | 0.73 | 3.521 | 5.2 | 57.3 | 11 |
| Example 14 | 50 | 0 | 0.68 | 3.521 | 5.2 | 57.3 | 11 |
| Example 15 | 50 | 0 | 0.716 | 3.521 | 5.2 | 57.3 | 11 |
| Example 16 | 50 | 0 | 0.698 | 3.521 | 5.2 | 57.3 | 11 |
| Example 17 | 50 | 0 | 0.712 | 3.521 | 5.2 | 57.3 | 11 |
| Example 18 | 50 | 0 | 0.693 | 3.521 | 5.2 | 57.3 | 11 |
| Example 19 | 50 | 0 | 0.709 | 3.521 | 5.2 | 57.3 | 11 |
| Example 20 | 50 | 0 | 0.709 | 3.521 | 5.2 | 57.3 | 11 |
| Example 21 | 50 | 2 | 0.704 | 3.521 | 5.2 | 54.0 | 10.4 |
| Example 22 | 50 | 5 | 0.704 | 3.521 | 4.8 | 50.0 | 10.4 |
| Example 23 | 50 | 10 | 0.704 | 3.521 | 4.6 | 44.2 | 9.5 |
| Example 24 | 50 | 15 | 0.704 | 3.521 | 4.7 | 39.5 | 8.4 |
| Example 25 | 50 | 20 | 0.704 | 3.521 | 4.8 | 35.7 | 7.5 |
| Example 26 | 50 | 10 | 0.704 | 3.521 | 6.3 | 42.6 | 6.8 |
| Comparative example 1 | / | / | / | / | / | / | / |
| Comparative example 2 | / | / | / | / | / | / | / |
| Comparative example 3 | / | / | / | / | / | / | / |
| Comparative example 4 | / | / | / | / | / | / | / |
| Comparative example 5 | / | / | / | / | / | / | / |
| Comparative example 6 | / | / | / | / | / | / | / |
| Comparative example 7 | 50 | 0 | 2.213 | 2.012 | 25.2 | 22.7 | 0.9 |
| Comparative example 8 | 20 | 50 | 3.521 | 0.704 | 35.2 | 5.2 | 0.147 |

The thickness h₁ of the first part of the negative electrode plate and the thickness h₂ of the second part were measured by using the following method:
A cross section of the negative electrode plate was shot by using a scanning electron microscope (SEM) (for example, ZEISS Sigma 300), and the thickness h₁ of the first part of the negative electrode plate and the thickness h₂ of the second part were measured and calculated.

The capacity C₁ per unit area of the first part and the capacity C₂ per unit area of the second part were measured by using the following method.

S1: Clean any one surface of a double-sided negative electrode plate.

S2: Die-cut, by using a die, a single-sided negative electrode plate into a small wafer, where a radius of the small wafer is 7 mm, an area S of the small wafer is equal to 0.49π, and the area S of the small wafer is in cm².

S3: Dry the single-sided negative electrode plate with the area S, and then transfer the single-sided negative electrode plate to a glove box to prepare the single-sided negative electrode plate into a lithium half cell.

S4: Test a capacity Q₄ of the foregoing wafer by using testing equipment of Wuhan Land Electronics Co., Ltd., where the capacity Q₄ is in mAh; and determine, through calculation, that a capacity C₄ per unit area of a negative electrode active substance layer is equal to Q₄÷S, where the capacity C₄ per unit area of the negative electrode active substance layer is in mAh/cm².

S5: Peel off, by using a binder tape, a second part from the single-sided negative electrode plate processed in step S1.

S6: Test, by using the same method as steps S2, S3, and S4, a capacity Q₁ of a first part based on the negative electrode plate from which the second part is peeled off, where the capacity Q₁ is in mAh; determine, through calculation, that a capacity C₁ per unit area of the first part is equal to Q₁÷S, where the capacity C₁ per unit area of the negative electrode active substance layer is in mAh/cm²; and determine, through calculation, that a capacity C₂ per unit area of the second part is equal to C₄-C₁, where the capacity C₂ per unit area of the negative electrode active substance layer is in mAh/cm².

Formulas of the first parts and the second parts of the secondary batteries in Examples 1 to 26 and Comparative examples 1 to 8 were shown in Table 2.

**Table 2 Formulas of the first parts and the second parts of the secondary batteries in Examples 1 to 26 and Comparative examples 1 to 8**

| Item | First part | | | | | | | | Second part | |
|---|---|---|---|---|---|---|---|---|---|---|
| | Silicon-based material type | Silicon-based material content (wt%) | Graphite content (wt%) | Styrene-butadiene rubber content (wt%) | Conductive carbon content (wt%) | Carbon nanotube content (wt%) | Aspect ratio of the carbon nanotube | Surfactant content (wt%) | Silicon-based material type | Silicon-based material content (wt%) |
| Example 1 | Silicon monoxide | 50 | 37.2 | 10 | 1 | 0.3 | 5000 | 1.5 | / | 0 |
| Example 2 | Silicon monoxide | 50 | 37.2 | 10 | 1 | 0.3 | 5000 | 1.5 | / | 0 |
| Example 3 | Silicon monoxide | 50 | 37.2 | 10 | 1 | 0.3 | 5000 | 1.5 | / | 0 |
| Example 4 | Silicon monoxide | 50 | 37.2 | 10 | 1 | 0.3 | 5000 | 1.5 | / | 0 |
| Example 5 | Silicon monoxide | 50 | 37.2 | 10 | 1 | 0.3 | 5000 | 1.5 | / | 0 |
| Example 6 | Silicon monoxide | 50 | 37.2 | 10 | 1 | 0.3 | 5000 | 1.5 | / | 0 |
| Example 7 | Silicon monoxide | 20 | 67.2 | 10 | 1 | 0.3 | 5000 | 1.5 | / | 0 |
| Example 8 | Silicon monoxide | 30 | 55 | 12.2 | 1 | 0.3 | 5000 | 1.5 | / | 0 |
| Example 9 | Silicon monoxide | 40 | 47.2 | 10 | 1 | 0.3 | 5000 | 1.5 | / | 0 |
| Example 10 | Silicon monoxide | 60 | 27.2 | 10 | 1 | 0.3 | 5000 | 1.5 | / | 0 |
| Example 11 | Silicon monoxide | 70 | 17.2 | 10 | 1 | 0.3 | 5000 | 1.5 | / | 0 |
| Example 12 | Silicon monoxide | 80 | 7.2 | 10 | 1 | 0.3 | 5000 | 1.5 | / | 0 |
| Example 13 | Silicon monoxide | 50 | 44.2 | 3 | 1 | 0.3 | 5000 | 1.5 | / | 0 |
| Example 14 | Silicon monoxide | 50 | 27.2 | 20 | 1 | 0.3 | 5000 | 1.5 | / | 0 |
| Example 15 | Silicon monoxide | 50 | 37.7 | 10 | 0.5 | 0.3 | 5000 | 1.5 | / | 0 |
| Example 16 | Silicon monoxide | 50 | 33.2 | 10 | 5 | 0.3 | 5000 | 1.5 | / | 0 |
| Example 17 | Silicon monoxide | 50 | 37.95 | 10 | 1 | 0.05 | 5000 | 1 | / | 0 |
| Example 18 | Silicon monoxide | 50 | 32.8 | 10 | 1 | 1.2 | 5000 | 5 | / | 0 |
| Example 19 | Silicon monoxide | 50 | 37.2 | 10 | 1 | 0.3 | 1000 | 1.5 | / | 0 |
| Example 20 | Silicon monoxide | 50 | 37.2 | 10 | 1 | 0.3 | 10000 | 1.5 | / | 0 |
| Example 21 | Silicon monoxide | 50 | 37.2 | 10 | 1 | 0.3 | 5000 | 1.5 | Silicon monoxide | 2 |
| Example 22 | Silicon monoxide | 50 | 37.2 | 10 | 1 | 0.3 | 5000 | 1.5 | Silicon monoxide | 5 |
| Example 23 | Silicon monoxide | 50 | 37.2 | 10 | 1 | 0.3 | 5000 | 1.5 | Silicon monoxide | 10 |
| Example 24 | Silicon monoxide | 50 | 37.2 | 10 | 1 | 0.3 | 5000 | 1.5 | Silicon monoxide | 15 |
| Example 25 | Silicon monoxide | 50 | 37.2 | 10 | 1 | 0.3 | 5000 | 1.5 | Silicon monoxide | 20 |
| Example 26 | Silicon carbon material | 50 | 37.2 | 10 | 1 | 0.3 | 5000 | 1.5 | Silicon carbon material | 10 |
| Comparative example 1 | One active substance layer, and silicon monoxide: 3wt% | | | | | | | | | |
| Comparative example 2 | One active substance layer, and silicon monoxide: 6wt% | | | | | | | | | |
| Comparative example 3 | One active substance layer, and silicon monoxide: 13wt% | | | | | | | | | |
| Comparative example 4 | One active substance layer, and silicon monoxide: 18wt% | | | | | | | | | |
| Comparative example 5 | One active substance layer, and silicon monoxide: 23wt% | | | | | | | | | |
| Comparative example 6 | One active substance layer, and silicon carbon material: 13wt% | | | | | | | | | |
| Comparative example 7 | Silicon monoxide | 50 | 37.2 | 10 | 1 | 0.3 | 5000 | 1.5 | / | 0 |
| Comparative example 8 | Silicon monoxide | 20 | 76.2 | 1.8 | 0.5 | 0.3 | 5000 | 1.2 | Silicon monoxide | 50 |

Dv50 of the silicon-based material in the first part in each of Examples 1 to 26 was 6 µm, and Dv99 was 10.5 µm; Dv50 of the silicon-based material in the second part in each of Examples 21 to 26 was 6 µm; Dv50 of graphite in the first part in each of Examples 1 to 26 was 5.1 µm, and Dv99 was 11.8 µm; and Dv50 of graphite in the second part in each of Examples 1 to 26 was 14.8 µm. In each of Comparative examples 1 to 8, Dv50 of the silicon-based material was 6 µm, Dv99 of the silicon-based material was 10.5 µm, and Dv50 of graphite was 5.1 µm.

### Test example 1

The secondary batteries prepared in Examples 1 to 26 and Comparative examples 1 to 8 were taken separately, first Coulombic efficiency ICE, capacity retention rates ρ1, 300-cycle expansion rates Δh300, and storage reversible capacity retention rates p2 were measured separately, and results were shown in Table 3.

### First Coulombic efficiency Test (first efficiency):

A battery was charged to 3.4 V at a rate of 0.02C at 45°C, and then a capacity measured when the battery was charged to 3.75 V at a rate of 0.1C was marked as C0. Then, the battery was charged to 4.25 V at a rate of 0.33C at 25°C, and a capacity measured when the battery was charged to 0.05C at a constant voltage of 4.25 V was marked as C1. Finally, a capacity measured when the battery was discharged to 2.5 V at 0.33C was marked as D0. First Coulombic efficiency of the secondary battery was that ICE=D0/(C0+C1)×100%.

### Cycle test:

The secondary battery was charged to a voltage of 4.25 V at a constant current rate of 1D0 in a constant temperature environment of 45°C, and then charged at the constant voltage of 4.25 V until a current was less than or equal to 0.05D0. After that, the secondary battery stood for 5 mins. Then, the secondary battery was discharged at a constant current rate of 1C until a voltage was 2.5 V (where a capacity in this step was marked as C3). After that, the secondary battery stood for 5 mins. The secondary battery was charged and discharged for 500 cycles according to the foregoing method (where a discharge capacity at a 500^{th} cycle was marked as C500). It was calculated that a cycle capacity retention rate of the secondary battery was that ρ1 = C500 ÷ C3 × 100%.

### Negative electrode plate expansion test:

When a cold pressing process was completed on a negative electrode plate of the secondary battery, a thickness of the electrode plate was recorded as h0. According to the method for testing cycle performance of the secondary battery at 45°C, the secondary battery was cycled 300 times, charged at a constant current rate of 1D0 until the voltage was 4.25 V, and then charged at the constant voltage of 4.25 V until the current was equal to or less than 0.05C. After that, the secondary battery stood for 5 mins. In this case, the secondary battery was in a fully charged state. Then, the cycled secondary battery was disassembled in a drying room, and a thickness of the negative electrode plate after the 300 cycles was recorded as h300. A 300-cycle expansion rate of the electrode plate of the secondary battery at 45°C was that Δh300=(h300-h0)/h0*100%.

### Storage Test:

The secondary battery was charged at a constant current rate of 0.33D0 in an environment of 25°C until the voltage was 4.25 V, and then charged at the constant voltage of 4.25 V until the current was less than or equal to 0.05D0. After that, the secondary battery stood for 5 mins. Then, the secondary battery was discharged at the constant current rate of 0.33D0 until the voltage was 2.5 V (where a capacity in this step was marked as C4). Then, the secondary battery was charged at the constant current rate of 0.33D0 until the voltage was 4.25 V, and then charged at the constant voltage of 4.25 V until the current was less than or equal to 0.05D0. In this case, the secondary battery was in the fully charged state and transferred to an environment of 60°C for storage for 100 days. Then, the secondary battery was transferred to the environment of 25°C, discharged at the constant current rate of 0.33D0 until the voltage was 2.5 V. Finally, the secondary battery was charged at the constant current rate of 0.33D0 until the voltage was 4.25 V, and then charged at the constant voltage of 4.25 V until the current was less than or equal to 0.05D0. After that, the secondary battery stood for 5 mins, and then was discharged at the constant current rate of 0.33D0 until the voltage was 2.5 V (where a capacity in this step was marked as C100). It was calculated that a storage reversible capacity retention rate of the secondary battery was that ρ2 = C100 ÷ C4 × 100%.

**Table 3 Performance of the secondary batteries in Examples 1 to 26 and Comparative examples 1 to 8**

| Item | Silicon content (wt%) of the negative electrode active substance layer | ICE | ρ1 | Δh300 | p2 |
|---|---|---|---|---|---|
| Example 1 | 3.79 | 93.0% | 93.8% | 28.7% | 96.7% |
| Example 2 | 1.01 | 93.5% | 95.7% | 19.5% | 97.3% |
| Example 3 | 2.16 | 93.3% | 95.0% | 23.2% | 97.0% |
| Example 4 | 4.65 | 92.7% | 93.2% | 32.1% | 96.1% |
| Example 5 | 7.05 | 91.6% | 92.1% | 38.3% | 94.8% |
| Example 6 | 14.03 | 88.5% | 87.7% | 45.8% | 93.1% |
| Example 7 | 1.52 | 93.4% | 94.3% | 25.7% | 96.6% |
| Example 8 | 2.28 | 93.5% | 94.6% | 25.8% | 96.7% |
| Example 9 | 3.05 | 93.2% | 94.2% | 28.1% | 96.9% |
| Example 10 | 4.57 | 92.8% | 92.9% | 30.6% | 95.9% |
| Example 11 | 5.33 | 92.3% | 92.0% | 35.8% | 95.0% |
| Example 12 | 6.1 | 91.5% | 90.8% | 38.7% | 94.0% |
| Example 13 | 3.79 | 93.1% | 92.7% | 33.7% | 95.9% |
| Example 14 | 3.79 | 92.7% | 94.0% | 26.7% | 96.6% |
| Example 15 | 3.79 | 93.0% | 93.7% | 28.9% | 96.5% |
| Example 16 | 3.79 | 92.5% | 93.0% | 29.5% | 96.4% |
| Example 17 | 3.79 | 92.4% | 93.1% | 31.2% | 96.3% |
| Example 18 | 3.79 | 92.6% | 93.7% | 26.5% | 96.3% |
| Example 19 | 3.79 | 92.5% | 93.1% | 30.9% | 96.1% |
| Example 20 | 3.79 | 92.5% | 93.5% | 26.8% | 96.2% |
| Example 21 | 4.84 | 91.7% | 91.6% | 35.8% | 94.9% |
| Example 22 | 8.89 | 91.0% | 90.5% | 45.2% | 94.0% |
| Example 23 | 13.88 | 88.1% | 86.3% | 53.6% | 92.6% |
| Example 24 | 18.75 | 87.4% | 84.3% | 60.9% | 91.8% |
| Example 25 | 23.52 | 87.0% | 82.9% | 68.9% | 90.3% |
| Example 26 | 13.88 | 88.6% | 89.7% | 44.6% | 93.4% |
| Comparative example 1 | 3 | 92.2% | 92.4% | 36.4% | 95.2% |
| Comparative example 2 | 6 | 90.6% | 89.7% | 49.4% | 93.4% |
| Comparative example 3 | 13 | 87.5% | 84.5% | 59.8% | 91.8% |
| Comparative example 4 | 18 | 86.8% | 81.3% | 71.4% | 90.7% |
| Comparative example 5 | 23 | 86.4% | 79.8% | 88.3% | 89.4% |
| Comparative example 6 | 13 | 87.7% | 87.6% | 54.6% | 92.3% |
| Comparative example 7 | 15.49 | 86.5% | 84.3% | 62.8% | 91.0% |
| Comparative example 8 | 23.52 | 85.7% | 74.2% | 72.0% | 88.3% |

It can be seen from comparison between Examples 2, 3, 7, and 8 and Comparative example 1 that, the silicon content of the negative electrode active substance layer in the secondary battery in Comparative example 1 is 3wt%, and the silicon contents of the negative electrode active substance layers in the secondary batteries in Examples 2, 3, 7, and 8 are less than 3wt%. The first Coulombic efficiency ICE, the cycle capacity retention rates ρ1, and the storage reversible capacity retention rates p2 of the secondary batteries in Examples 2, 3, 7, and 8 are all significantly higher than the first Coulombic efficiency ICE, the cycle capacity retention rate ρ1, and the storage reversible capacity retention rate p2 of the secondary battery in Comparative example 1; and the 300-cycle expansion rates Δh300 of the electrode plates of the secondary batteries at 45°C in Examples 2, 3, 7, and 8 are significantly lower than the 300-cycle expansion rate Δh300 of the electrode plate of the secondary battery at 45°C in Comparative example 1.

It can be seen from comparison between Examples 1, 4, 9 to 11, and 13 to 21 and Comparative example 1 that, the silicon content of the negative electrode active substance layer in the secondary battery in Comparative example 1 is 3wt%, and the silicon contents of the negative electrode active substance layers in the secondary batteries in Examples 1, 4, 9 to 11, and 13 to 21 are greater than or equal to 3wt%. The first Coulombic efficiency ICE of the secondary batteries in Examples 1, 4, 9 to 11, and 13 to 20 is all higher than the first Coulombic efficiency ICE of the secondary battery in Comparative example 1, and the first Coulombic efficiency ICE of the secondary battery in Example 21 is slightly lower than the first Coulombic efficiency ICE of the secondary battery in Comparative example 1 on the premise that the silicon content of the negative electrode active substance layer in the secondary battery in Example 21 is higher. The cycle capacity retention rates ρ1 of the secondary batteries in Examples 1, 4, 9, 10, and 13 to 20 are all higher than the cycle capacity retention rate ρ1 of the secondary battery in Comparative example 1, and the cycle capacity retention rates ρ1 of the secondary batteries in Examples 11 and 21 are slightly lower than the cycle capacity retention rate ρ1 of the secondary battery in Comparative example 1 on the premise that the silicon contents of the negative electrode active substance layers in the secondary batteries in Examples 11 and 21 are higher. The 300-cycle expansion rates Δh300 of the electrode plates of the secondary batteries at 45°C in Examples 1, 4, 9 to 11, and 13 to 21 are all lower than the 300-cycle expansion rate Δh300 of the electrode plate of the secondary battery at 45°C in Comparative example 1. The storage reversible capacity retention rates p2 of the secondary batteries in Examples 1, 4, 9, 10, and 13 to 20 are all higher than the storage reversible capacity retention rate p2 of the secondary battery in Comparative example 1, and the storage reversible capacity retention rates p2 of the secondary batteries in Examples 11 and 21 are slightly lower than the storage reversible capacity retention rate p2 of the secondary battery in Comparative example 1 on the premise that the silicon contents of the negative electrode active substance layers in the secondary batteries in Examples 11 and 21 are higher.

It can be seen from comparison between Examples 5, 12, and 22 and Comparative example 2 that, the silicon content of the negative electrode active substance layer in the secondary battery in Comparative example 2 is 6wt%, and the silicon contents of the negative electrode active substance layers in the secondary batteries in Examples 5, 12, and 22 are greater than or equal to 6wt%. On the premise that the silicon contents of the negative electrode active substance layers in the secondary batteries in Examples 5, 12, and 22 are higher, the first Coulombic efficiency ICE, the cycle capacity retention rates ρ1, and the storage reversible capacity retention rates p2 of the secondary batteries in Examples 5, 12, and 22 are all significantly higher than the first Coulombic efficiency ICE, the cycle capacity retention rate ρ1, and the storage reversible capacity retention rate p2 in Comparative example 2; and the 300-cycle expansion rates Δh300 of the electrode plates of the secondary batteries at 45°C in Examples 5, 12, and 22 are significantly lower than the 300-cycle expansion rate Δh300 of the electrode plate of the secondary battery at 45°C in Comparative example 2.

It can be seen from comparison between Examples 6, 23, and 26 and Comparative example 3 that, the silicon content of the negative electrode active substance layer in the secondary battery in Comparative example 3 is 13wt%, and the silicon contents of the negative electrode active substance layers in the secondary batteries in Examples 6, 23, and 26 are greater than or equal to 13wt%. On the premise that the silicon contents of the negative electrode active substance layers in the secondary batteries in Examples 6, 23, and 26 are higher, the first Coulombic efficiency ICE, the cycle capacity retention rates ρ1, and the storage reversible capacity retention rates p2 of the secondary batteries in Examples 6, 23, and 26 are all significantly higher than the first Coulombic efficiency ICE, the cycle capacity retention rate ρ1, and the storage reversible capacity retention rate p2 in Comparative example 3; and the 300-cycle expansion rates Δh300 of the electrode plates of the secondary batteries at 45°C in Examples 6, 23, and 26 are significantly lower than the 300-cycle expansion rate Δh300 of the electrode plate of the secondary battery at 45°C in Comparative example 3.

It can be seen from comparison between Example 24 and Comparative example 4 that, the silicon content of the negative electrode active substance layer in the secondary battery in Comparative example 4 is 18wt%, and the silicon content of the negative electrode active substance layer in the secondary battery in Example 24 is greater than or equal to 18wt%. On the premise that the silicon content of the negative electrode active substance layer in the secondary battery in Example 24 is higher, the first Coulombic efficiency ICE, the cycle capacity retention rate ρ1, and the storage reversible capacity retention rate p2 of the secondary battery in Example 24 are all significantly higher than the first Coulombic efficiency ICE, the cycle capacity retention rate ρ1, and the storage reversible capacity retention rate p2 in Comparative example 4; and the 300-cycle expansion rate Δh300 of the electrode plate of the secondary battery at 45°C in Example 24 is significantly lower than the 300-cycle expansion rate Δh300 of the electrode plate of the secondary battery at 45°C in Comparative example 4.

It can be seen from comparison between Example 25 and Comparative example 5 that, the silicon content of the negative electrode active substance layer in the secondary battery in Comparative example 5 is 23wt%, and the silicon content of the negative electrode active substance layer in the secondary battery in Example 25 is greater than or equal to 23wt%. On the premise that the silicon content of the negative electrode active substance layer in the secondary battery in Example 25 is higher, the first Coulombic efficiency ICE, the cycle capacity retention rate ρ1, and the storage reversible capacity retention rate p2 of the secondary battery in Example 25 are all significantly higher than the first Coulombic efficiency ICE, the cycle capacity retention rate ρ1, and the storage reversible capacity retention rate p2 in Comparative example 5; and the 300-cycle expansion rate Δh300 of the electrode plate of the secondary battery at 45°C in Example 25 is significantly lower than the 300-cycle expansion rate Δh300 of the electrode plate of the secondary battery at 45°C in Comparative example 5.

It can be seen from comparison among Example 26, Comparative example 3, and Comparative example 6 that, in Example 26 and Comparative example 6, silicon monoxide is replaced with the silicon carbon material. On the premise that the silicon content of the negative electrode active substance layer in the secondary battery in Example 26 is higher, the first Coulombic efficiency ICE, the cycle capacity retention rate ρ1, and the storage reversible capacity retention rate p2 of the secondary battery in Example 26 are all significantly higher than the first Coulombic efficiency ICE, the cycle capacity retention rates ρ1, and the storage reversible capacity retention rates p2 of the secondary batteries in Comparative example 3 and Comparative example 6, and the first Coulombic efficiency ICE, the cycle capacity retention rate ρ1, and the storage reversible capacity retention rate p2 in Comparative example 6 are significantly higher than the first Coulombic efficiency ICE, the cycle capacity retention rate ρ1, and the storage reversible capacity retention rate p2 in Comparative example 3; and the 300-cycle expansion rate Δh300 of the electrode plate of the secondary battery at 45°C in Example 26 is significantly lower than the 300-cycle expansion rates Δh300 of the electrode plates of the secondary batteries at 45°C in Comparative example 3 and Comparative example 6, and the 300-cycle expansion rate Δh300 of the electrode plate of the secondary battery at 45°C in Comparative example 6 is significantly lower than the 300-cycle expansion rate Δh300 of the electrode plate of the secondary battery at 45°C in Comparative example 3.

It can be seen from comparison between Example 1 and Comparative example 7 that, in Comparative example 7, based on Example 1, the weight per unit area of the negative electrode plate semi-finished product is changed to 2.53 mg/cm², the weight per unit area of the negative electrode plate is changed to 8.154 mg/cm², and others parts remain unchanged; and h₂/h₁ of the secondary battery in Comparative example 7 is only 0.9, and h₂/h₁<2. In this way, the silicon content of the negative electrode active substance layer in the secondary battery in Comparative example 7 is greatly improved, and the first Coulombic efficiency ICE, the cycle capacity retention rate ρ1, and the storage reversible capacity retention rate p2 of the secondary battery in Comparative example 7 are all significantly lower than the first Coulombic efficiency ICE, the cycle capacity retention rate ρ1, and the storage reversible capacity retention rate p2 of the secondary battery in Example 1; and the 300-cycle expansion rate Δh300 of the electrode plate of the secondary battery at 45°C in Comparative example 7 is significantly higher than the 300-cycle expansion rate Δh300 of the electrode plate of the secondary battery at 45°C in Example 1.

It can be seen from comparison between Example 25 and Comparative example 8 that, in Comparative example 8, the first part in Example 25 is designed as the second part, and the second part in Example 25 is designed as the first part. In this way, on the premise of the silicon contents of the negative electrode active substance layers, the first Coulombic efficiency ICE, the cycle capacity retention rate ρ1, and the storage reversible capacity retention rate p2 in Example 25 are all significantly higher than the first Coulombic efficiency ICE, the cycle capacity retention rate ρ1, and the storage reversible capacity retention rate p2 in Comparative example 8; and the 300-cycle expansion rate Δh300 of the electrode plate of the secondary battery at 45°C in Example 25 is lower than the 300-cycle expansion rate Δh300 of the electrode plate of the secondary battery at 45°C in Comparative example 8.

It can be seen from Examples 1 and 8 to 11 that, when the content of the silicon-based material in the first part ranged from 30wt% to 70wt%, the first Coulombic efficiency ICE of the secondary battery ranged from 92.3% to 93.5%, the cycle capacity retention rate ρ1 ranged from 92% to 94.6%, the 300-cycle expansion rate Δh300 of the electrode plate at 45°C ranged from 25.8% to 35.8%, and the storage reversible capacity retention rate p2 ranged from 95% to 96.9%. It can be seen from comparison between Example 7 and Examples 1 and 8 to 11 that, on the premise that the silicon content of the negative electrode active substance layer in the secondary battery in Example 7 is lower, the first Coulombic efficiency ICE, the cycle capacity retention rates ρ1, and the storage reversible capacity retention rates p2 substantially remain unchanged, and are not significantly improved. It can be seen from comparison between Example 12 and Examples 1 and 8 to 11 that, the 300-cycle expansion rate Δh300 of the electrode plate in the secondary battery at 45°C in Example 12 is excessively high.

In conclusion, it should be noted that the foregoing embodiments are for description of the technical solutions of this application only rather than for limiting this application. Although this application has been described in detail with reference to the foregoing embodiments, those of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. Especially, as long as there is no structural conflict, the various technical features mentioned in each embodiment can be combined in any way. This application is not limited to the particular embodiments disclosed herein, but includes all technical solutions that fall within the scope of the claims.

## Claims

1. A negative electrode plate, wherein the negative electrode plate comprises a negative electrode current collector and a negative electrode active substance layer, the negative electrode active substance layer comprises a first part and a second part in a thickness direction, the first part is a part close to the negative electrode current collector, a mass percentage of a silicon-based material in the first part in the first part is greater than a mass percentage of a silicon-based material in the second part in the second part, a capacity per unit area of the first part is C₁, a capacity per unit area of the second part is C₂, and C₁<C₂.

2. The negative electrode plate according to claim 1, wherein 0.11C₂≤C₁≤0.25C₂.

3. The negative electrode plate according to claim 1 or 2, wherein the first part is a first negative electrode active layer formed on a surface of the negative electrode current collector, the second part is a second negative electrode active layer formed on a surface of the first negative electrode active layer, and a difference between a mass percentage of the silicon-based material in the first negative electrode active layer in the first negative electrode active layer and a mass percentage of a silicon-based material in the second negative electrode active layer in the second negative electrode active layer ranges from 20% to 80%.

4. The negative electrode plate according to any one of claims 1 to 3, wherein the first part comprises 30wt% to 70wt% of the silicon-based material, and the silicon-based material comprises silicon oxygen and/or silicon carbon.

5. The negative electrode plate according to claim 4, wherein Dv50 of the silicon-based material in the first part ranges from 1 µm to 8 µm, and Dv99≤20 µm.

6. The negative electrode plate according to any one of claims 1 to 5, wherein the first part comprises 10wt% to 55wt% of graphite.

7. The negative electrode plate according to any one of claims 1 to 6, wherein Dv50 of graphite in the first part ranges from 1 µm to 8 µm, and Dv99≤30 µm.

8. The negative electrode plate according to any one of claims 1 to 7, wherein the first part comprises 3wt% to 20wt% of a binder.

9. The negative electrode plate according to any one of claims 1 to 8, wherein the first part comprises 0.15wt% to 1.2wt% of a carbon nanotube.

10. The negative electrode plate according to claim 9, wherein an aspect ratio of the carbon nanotube is greater than or equal to 1000.

11. The negative electrode plate according to claim 9 or 10, wherein the first part further comprises 1wt% to 5wt% of a surfactant.

12. The negative electrode plate according to any one of claims 1 to 11, wherein the first part comprises 0.5wt% to 5wt% of a dotted conductive agent.

13. The negative electrode plate according to any one of claims 1 to 12, wherein a weight per unit area of the first part ranges from 0.3 mg/cm² to 2.3 mg/cm².

14. The negative electrode plate according to any one of claims 1 to 13, wherein the second part comprises a graphite material and the silicon-based material at a mass ratio of (80 to 100):(0 to 20).

15. The negative electrode plate according to claim 14, wherein Dv50 of the silicon-based material in the second part ranges from 1 µm to 8 µm, and Dv50 of graphite in the second part ranges from 1 µm to 20 µm.

16. The negative electrode plate according to any one of claims 1 to 15, wherein a weight per unit area of the negative electrode active substance layer ranges from 5.19 mg/cm² to 14.26 mg/cm², and compaction density ranges from 1.4 g/cm³ to 1.85 g/cm³.

17. The negative electrode plate according to any one of claims 1 to 16, wherein a thickness of the first part is h₁, a thickness of the second part is h₂, and h₂÷ h₁≥2.

18. The negative electrode plate according to claim 17, wherein h₁ ranges from 1.5 µm to 15.5 µm, and h₂ ranges from 34 µm to 66 µm.

19. The negative electrode plate according to any one of claims 1 to 18, wherein the second part comprises at least two sub-parts in the thickness direction, and a mass percentage of the silicon-based material in each of the sub-parts is different.

20. A secondary battery, wherein the secondary battery comprises a positive electrode plate and the negative electrode plate according to any one of claims 1 to 19, the positive electrode plate comprises a positive electrode active substance layer, and a capacity per unit area of the positive electrode active substance layer is C₃, a capacity per unit area of the negative electrode active substance layer is C₄, and 1.01C₃≤C₄≤1.2C₃.

21. A power consuming apparatus, wherein the power consuming apparatus comprises the secondary battery according to claim 20.
